# EUROPEAN PATENT APPLICATION

(11) **EP 4 838 064 A1**
(43) Date of publication of application: **11.11.2026**
(21) Application number: 26177324.6
(22) Date of filing: 07.05.2026
(51) Int. Cl.: F01D 25/30, F01D 25/04

(54) **TURBINE EXHAUST DUCT WITH DAMPING RING FOR AIRCRAFT ENGINES**

(30) Priority: 07.05.2025 US 202519201223
(71) Applicant: Pratt & Whitney Canada Corp., Longueuil, Québec J4G 1A1 (CA)
(72) Inventor: SYNNOTT, Remy, (01BE5) Longueuil, J4G 1A1 (CA); LEFEBVRE, Guy, (01BE5) Longueuil, J4G 1A1 (CA)
(74) Representative: Dehns

(57) **Abstract**

A turbine exhaust duct (TED) (30) for an aircraft engine, has: a body (31) having a central axis (17) and having an inner wall (36) and an outer wall (37) conjointly defining an annular inlet conduit (33) and outlet conduits (34, 35) communicating with the annular inlet conduit (33) and extending generally radially outward relative to the annular inlet conduit (33), the annular inlet conduit (33) extending from an inlet end (33A) to intersections with the outlet conduits (34, 35); and an inner damping ring (40) engaged to the inner wall (33) at the inlet end (33A) of the inlet conduit (33), the inner damping ring (40) biasing the inner wall (33) in a radial direction relative to the central axis (17).

## Description

### TECHNICAL FIELD

The application relates generally to aircraft engines and, more particularly, to exhaust cases of such engines.

### BACKGROUND

Exhaust ducts are disposed downstream of turbine sections and are configured for evacuating combustion gases that have been used to power the turbine sections. These ducts are subjected to dynamic excitations generated by unbalances, bearings, and aerodynamic characteristics of the flows flowing therein. Existing exhaust ducts are satisfactory to some extent, but improvements are always sought.

### SUMMARY

According to In one aspect of the present invention, there is provided a turbine exhaust duct (TED) for an aircraft engine, comprising: a body having a central axis and having an inner wall and an outer wall conjointly defining an annular inlet conduit and outlet conduits communicating with the annular inlet conduit and extending generally radially outward relative to the annular inlet conduit, the annular inlet conduit extending from an inlet end to intersections with the outlet conduits; and an inner damping ring engaged to the inner wall at the inlet end of the inlet conduit, the inner damping ring biasing the inner wall in a radial direction relative to the central axis.

The TED described above may include any of the following features, in any combinations.

Optionally, and in accordance with the above, the inner damping ring biases the inner wall towards the central axis.

Optionally, and in accordance with any of the above, the inner damping ring is received in a correspondingly-sized groove defined by the inner wall.

Optionally, and in accordance with any of the above, the correspondingly-sized groove is defined by an L-shaped flange secured to the inner wall, the L-shaped flange located outside a fluid flow passage defined between the inner wall and the outer wall.

Optionally, and in accordance with any of the above, the L-shaped flange includes a first section extending radially from the inner wall and a second section extending axially from the first section, the correspondingly-sized groove defined by the second section.

Optionally, and in accordance with any of the above, the second section extends axially towards the inlet end of the annular inlet conduit.

Optionally, and in accordance with any of the above, the correspondingly-sized groove is defined by the inner wall at a face oriented away from a fluid flow passage defined between the inner wall and the outer wall.

Optionally, and in accordance with any of the above, the inner damping ring has an at-rest diameter when not engaged to the inner wall, the at-rest diameter being smaller than a diameter of the inner damping ring when engaged to the inner wall.

Optionally, and in accordance with any of the above, the inner damping ring biases the inner wall away from the central axis, the inner damping ring has an at-rest diameter when not engaged to the outer wall, the at-rest diameter being greater than a diameter of the inner damping ring when engaged to the inner wall.

Optionally, and in accordance with any of the above, the inner damping ring is a spring-loaded ring.

According to another aspect of the present invention, there is provided a reverse-flow gas turbine engine, comprising: an outer case assembly extending around a central axis and enclosing a core, the core including a compressor section, a combustor, and a turbine section, the turbine section located forward of the combustor and of the compressor section relative to a direction of travel of the reverse-flow gas turbine engine, the outer case assembly including an exhaust case defining openings; a turbine exhaust duct mounted to the exhaust case and fluidly communicating with the turbine section, the turbine exhaust duct having: a body having a central axis and having an inner wall and an outer wall conjointly defining an annular inlet conduit and outlet conduits communicating with the annular inlet conduit and extending generally radially outward relative to the annular inlet conduit through the openings in the exhaust case, the annular inlet conduit extending from an inlet end to intersections with the outlet conduits; and an inner damping ring engaged to the inner wall at the inlet end of the inlet conduit, the inner damping ring biasing the inner wall radially towards or away from the central axis.

The reverse-flow gas turbine engine described above may include any of the following features, in any combinations.

Optionally, and in accordance with the above, the inner damping ring biases the inner wall towards the central axis.

Optionally, and in accordance with any of the above, the inner damping ring is received in a correspondingly-sized groove defined by the inner wall.

Optionally, and in accordance with any of the above, the correspondingly-sized groove is defined by an L-shaped flange secured to the inner wall, the L-shaped flange located outside a fluid flow passage defined between the inner wall and the outer wall.

Optionally, and in accordance with any of the above, the L-shaped flange includes a first section extending radially from the inner wall and a second section extending axially from the first section, the correspondingly-sized groove defined by the second section.

Optionally, and in accordance with any of the above, the second section extends axially towards the inlet end of the annular inlet conduit.

Optionally, and in accordance with any of the above, the correspondingly-sized groove is defined by the inner wall at a face oriented away from a gaspath defined between the inner wall and the outer wall.

Optionally, and in accordance with any of the above, the inner damping ring has an at-rest diameter when not engaged to the inner all, the at-rest diameter being smaller than a diameter of the inner damping ring when engaged to the inner wall.

Optionally, and in accordance with any of the above, the inner damping ring biases the inner wall away from the central axis, the inner damping ring has an at-rest diameter when not engaged to the outer wall, the at-rest diameter being greater than a diameter of the inner damping ring when engaged to the inner wall.

Optionally, and in accordance with any of the above, the inner damping ring is a spring-loaded ring.

### DESCRIPTION OF THE DRAWINGS

Reference is now made to the accompanying figures in which:
Fig. 1 is a schematic cross-sectional view of an aircraft engine depicted as a turboprop gas turbine engine;
Fig. 2 is a three dimensional view of an exhaust system of the aircraft engine of Fig. 1;
Fig. 3 is a cross-sectional view of the exhaust system of Fig. 2;
Fig. 4 is a three dimensional view of a turbine exhaust duct of the exhaust system of Fig. 3;
Fig. 5 is another three dimensional view of the turbine exhaust duct of Fig. 4;
Fig. 6 is a cutaway three dimensional view of a portion of the turbine exhaust duct of Fig. 4; and
Fig. 7 is a cross-sectional view of zone 7-7 on Fig. 3 illustrating an inner damping ring.

### DETAILED DESCRIPTION

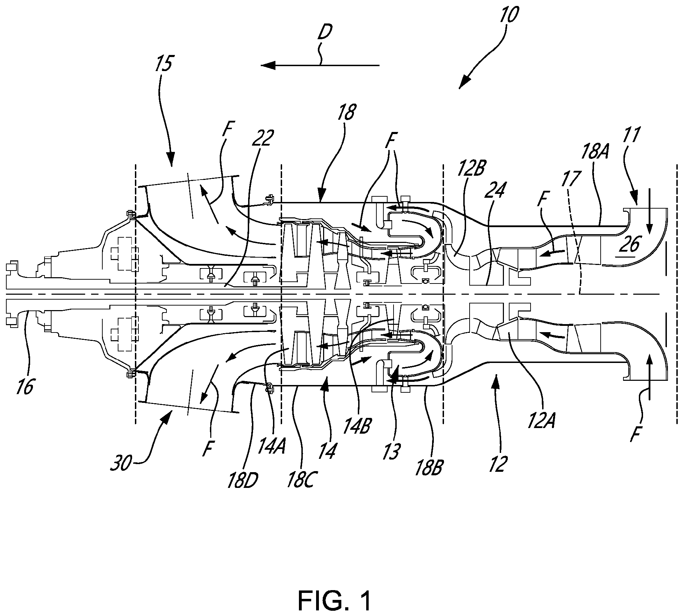

Fig. 1 illustrates an aircraft engine depicted as a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust system 15 through which the combustion gases exit the gas turbine engine 10. The gas turbine engine 10 has a central axis 17. The gas turbine engine 10 in Fig. 1 is a turboprop engine and includes an output shaft 16, which may drive a propulsor, such as a rotor or propeller, for providing thrust for flight and taxiing. It is understood that the gas turbine engine 10 can adopt various other configurations. For instance, the gas turbine engine could be configured as a turboshaft engine having an output shaft connectable to a rotatable load, such as a helicopter rotor or the like. Also, the engine could be embodied in the form of an hybrid engine including a heat engine and an electric engine.

The exemplified gas turbine engine 10 has an outer case assembly 18 housing a core through which gases flow and which includes most of the turbomachinery of the gas turbine engine 10. The illustrated gas turbine engine 10 is a "reverse-flow" engine 10 because gases flow through the core from the air inlet 11 at a rear or aft portion of the gas turbine engine 10, to the exhaust system 15 at a front portion of the gas turbine engine 10. This is in contrast to "throughflow" gas turbine engines in which gases flow through the core of the gas turbine engine from a front portion to a rear portion. The direction of the flow of gases through the gas turbine engine 10 is shown in Fig. 1 with arrows F.

It will thus be appreciated that the expressions "forward" and "aft" used herein may refer to the relative disposition of components of the gas turbine engine 10, in correspondence to the "forward" and "aft" directions of the gas turbine engine 10 and aircraft including the gas turbine engine 10 as defined with respect to the direction of travel D. In the embodiment shown, a component of the gas turbine engine 10 that is "forward" of another component is arranged within the gas turbine engine 10 such that it is located closer to the output shaft 16. Similarly, a component of the gas turbine engine 10 that is "aft" of another component is arranged within the gas turbine engine 10 such that it is further away from the output shaft 16.

Still referring to Fig. 1, the core of the gas turbine engine 10 may include one or more spools. The illustrated embodiment is a two-spool engine including a low pressure (LP) spool and a high pressure (HP) rotatable about the central axis 17 to perform compression to pressurize the air received through the air inlet 11, and to extract energy from the combustion gases before they exit the core via the exhaust system 15 at a forward end of the core. The core may include other components as well, including, but not limited to internal combustion engines (e.g. rotary engines such as Wankel engines for compounding power with a turbine of the turbine section), gearboxes, tower shafts, and bleed air outlets.

Each spool generally includes at least one component to compress the air that is part of the compressor section 12, and at least one component to extract energy from the combustion gases that is part of the turbine section 14. More particularly, according to the illustrated embodiment, the LP spool has an LP turbine 14A which extracts energy from the combustion gases, and an LP compressor 12A for pressurizing the air. The LP turbine 14A and the LP compressor 12A can each include one or more stages of rotors and stators, depending upon the desired engine thermodynamic cycle, for example. The LP spool further comprises an LP shaft 22 drivingly connecting the LP turbine 14A to the LP compressor 12A. Gears (not shown) can be provided to allow the LP compressor 12A to rotate at a different speed than the LP turbine 14A. The LP turbine 14A may also drivingly connected to the output shaft 16 via a reduction gear box.

Still referring to Fig. 1, the HP spool comprises an HP turbine 14B drivingly engaged (e.g. directly connected) to a HP compressor 12B by a high pressure shaft 24. Similarly to the LP turbine 14A and the LP compressor 12A, the HP turbine 14B and the HP compressor 12B can each include one or more stages of rotors and stators. The LP compressor 12A, the HP compressor 12B, the combustor 13, the HP turbine 14B and the LP turbine 14A are in serial flow communication via a gas path 26 being annular and extending through the core about the central axis 17. The gas path 26 leads to the exhaust system 15 downstream of the turbine section 14.

The outer case assembly 18 includes a plurality of cases disposed along the central axis 17 of the gas turbine engine 10. These cases are secured to one another at mating flanges using suitable fastening means, such as nuts and bolts. Any fastening means are contemplated. The outer case assembly 18 includes a compressor case 18A enclosing the compressor section 12, a combustor case 18B enclosing the combustor 13, a turbine case 18C enclosing the turbine section 14, and an exhaust case 18D being part of the exhaust system 15.

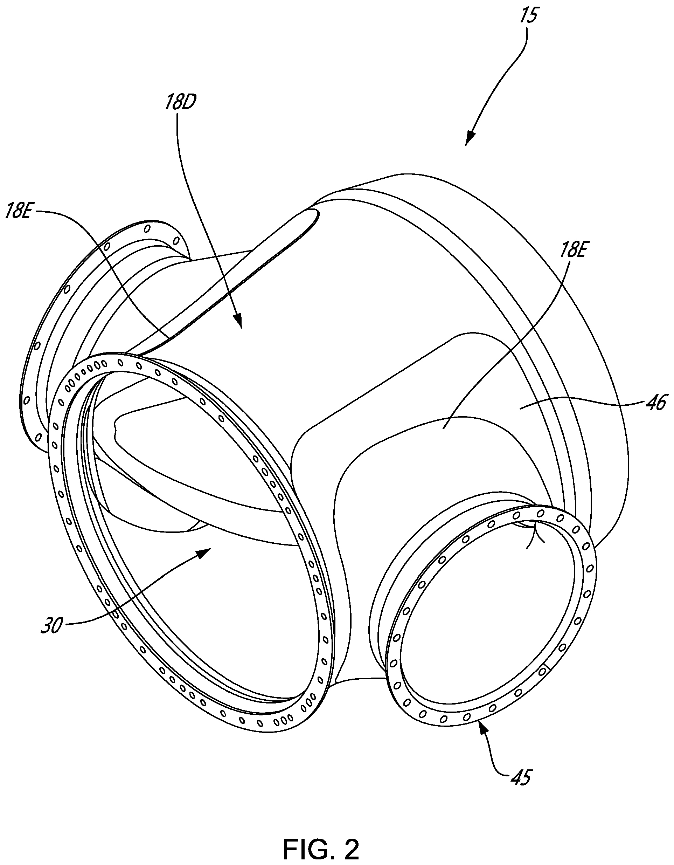

Referring to Figs. 1-3, the exhaust system 15 of the gas turbine engine 10 comprises a turbine exhaust duct (TED) 30 secured to the exhaust case 18D. The exhaust case 18D extends circumferentially around the central axis 17 and defines openings 18E, two openings in this embodiment, sized for receiving portions of the turbine exhaust duct 30 that will be described below. The openings 18E may be diametrically opposed to one another. More or less than two openings may be used in some embodiments.

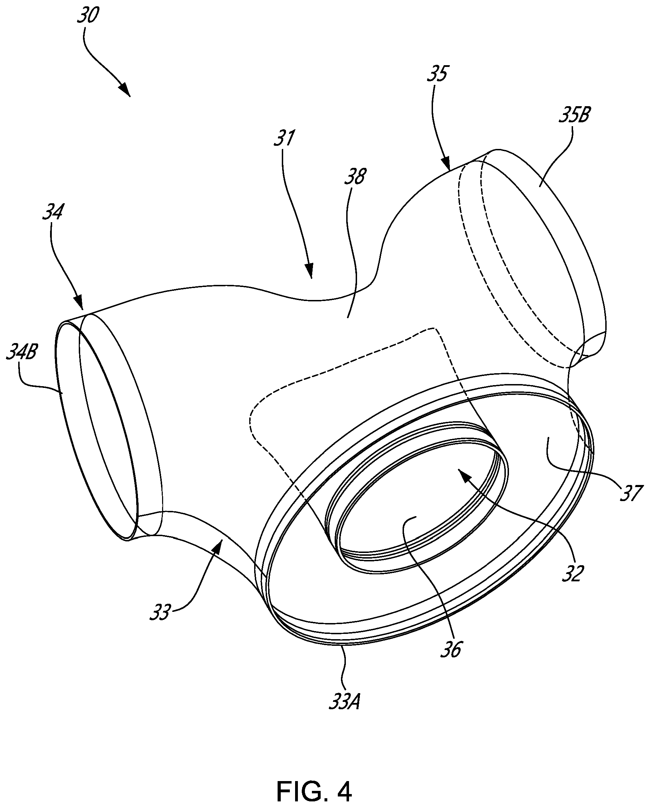

Referring now to Fig. 4, the turbine exhaust duct 30 is described in more detail. The turbine exhaust duct 30 is used for exhausting combustion gases received from the last stage of the LP turbine 14A. According to the illustrated embodiment, the turbine exhaust duct 30 is a non-axisymmetric dual port exhaust duct configured for directing combustion gases laterally on opposed sides of the outer case assembly 18 of the gas turbine engine 10. The turbine exhaust duct 30 is qualified as "non-axisymmetric" because the two exhaust ports thereof are not coaxial to the central axis 17 of the gas turbine engine (i.e., the exhaust flow discharged from the exhaust duct is not axial, it is rather directed in a direction that diverges from the central axis 17). According to at least some embodiments, the TED 30 has a generally "Y-shaped" body 31 including an inlet conduit 33 extending axially around the central axis 17 for receiving the annular flow of combustions gases discharged from the last stage of LP turbine 14A, and first and second outlet conduits 34, 35 branching off laterally from the inlet conduit 33. According to some embodiments, the first and second outlet conduits 34, 35 are identical.

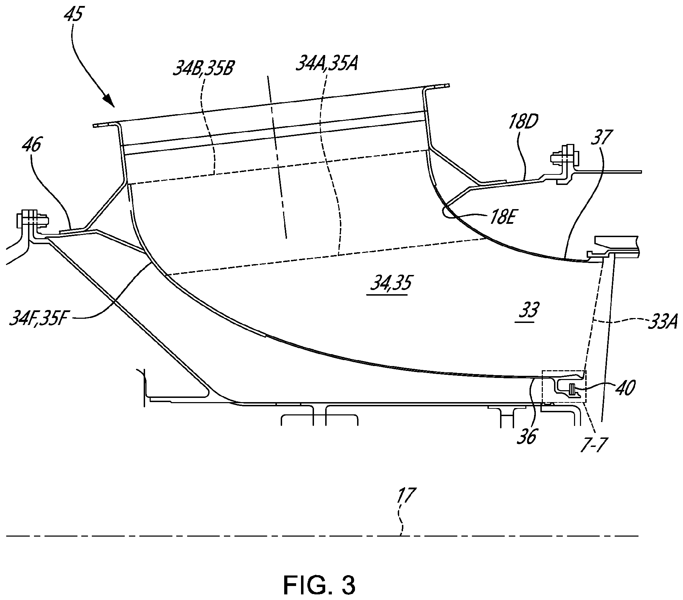

As can be appreciated from Fig. 1, the downstream end of each outlet conduit 34, 35 projects outwardly of the exhaust case 18D. As best shown in Fig. 3, each outlet conduit 34, 35 terminates into an exhaust port. The outlet conduits extend along respective axes that intersect the central axis 17. According to the illustrated embodiment, these axes has a main radial component and a secondary (i.e., smaller) axial component relative to the central axis 17. Stated differently, the exhaust ports of the outlet conduits 34, 35 are oriented to direct the combustion gases mainly in a radially outward direction. According to some embodiments, the exhaust port opening of the outlet conduits 34, 35 are circular. However, it is understood that other geometries are contemplated as well (e.g. oval).

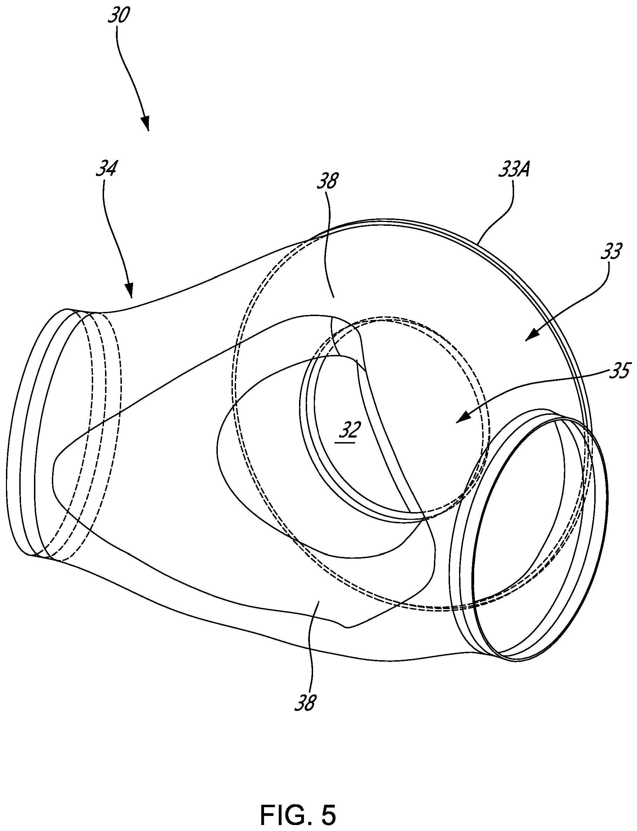

Referring to Figs. 3-5, the body 31 defines a fluid flow passage(s) about a central bore 32 for accommodating a shaft engine. The fluid flow passage of the annular body 31 generally includes the inlet conduit 33 through which the bore 32 extends, and in this example the two outlet conduits 34, 35 branching off from the inlet conduit 33 and extending radially away therefrom relative to the central axis 17. It is understood that the inlet and outlet conduits 33, 34, 35 may adopt various configurations. For instance, they can take the form of cylindrically straight or curved conduits. If desired the body 31 may include more than two outlet conduits. The inlet conduit 33 may be provided in the form of an annular inlet conduit wherein the inlet conduit 33 is connected to and communicates with the outlet conduits 34, 35. The outlet conduits 34, 35 may not be perpendicularly positioned relative to the inlet conduit 33 (i.e., be purely radially oriented with respect thereto), but rather may extend both radially and axially with respect thereto. Therefore, the body 31 could adopt various configurations including T-shaped and Y-shaped configurations. It is understood that any suitable configurations for the inlet and exhaust conduits may be used.

The inlet conduit 33 includes an inlet end 33A located adjacent the turbine section 14 for receiving combustion gases therefrom. The outlet conduits 34, 35 are generally cylindrical in shape in this example (though any suitable shape may be employed) and have respective outlet centerlines which extend at an angle relative to each other. As shown in Figs. 3 and 4, the outlet conduits 34, 35 have corresponding inlet ends 34A, 35A (Fig. 3) and outlet ends 34B, 35B. The inlet ends 34A, 35A are defined at the intersection between the inlet conduit 33 and the outlet conduits 34, 35, as shown schematically by the dotted lines in Fig. 3.

Referring to Figs. 4-5, the inlet conduit 33 is annular about the central axis 17, which also defines the central axis of the inlet conduit 33. The inlet conduit 33 is defined by an inner peripheral wall 36 and an outer peripheral wall 37. The outer peripheral wall 37 is a circumscribing wall of the inlet conduit 33, and constitutes a periphery of the inlet conduit 33. The inlet conduit 33 may include two circumferentially spaced-apart splitters 38. The splitters 38 may take the form of raises or bumps formed inside the body 31 at a bottom of the inlet conduit 33 and project in a direction toward the central axis 17. The splitters 38 are configured to split the inlet flow in two to direct the two flows towards the outlet conduits 34, 35. The splitters 38 may be omitted in some configurations.

As shown in Figs. 4-5, the outer peripheral wall 37 and the inner peripheral wall 36 are connected to one another at the outlet ends 34B, 35B of the outlet conduits 34, 35. It may therefore be said that the outlet conduits 34, 35 are defined conjointly by the inner peripheral wall 36 and the outer peripheral wall 37. In other words, the inner peripheral wall 36 and the outer peripheral wall 37 are cylindrically shaped at the inlet end 33A of the inlet conduit 33 and their shape diverge from the central axis 17 and merge together to conjointly define the outlet ends 34B, 35B of the outlet conduits 34, 35.

The turbine exhaust duct 30 may be exposed to strong vibrations during operation. The thickness of the sheet metal used to define the gas passage may be reduced to optimize its weight. Inventors of the instant disclosure have observed that the dynamic excitations present in the gas turbine engine 10 may be generated by unbalances, bearings, unstable aerodynamic flows, etc.. It has been observed that these excitations may lead to stresses and displacements during engine operation. As will be seen hereinafter, at least some embodiments of the turbine exhaust duct 30 have features that may at least partially alleviate these drawbacks.

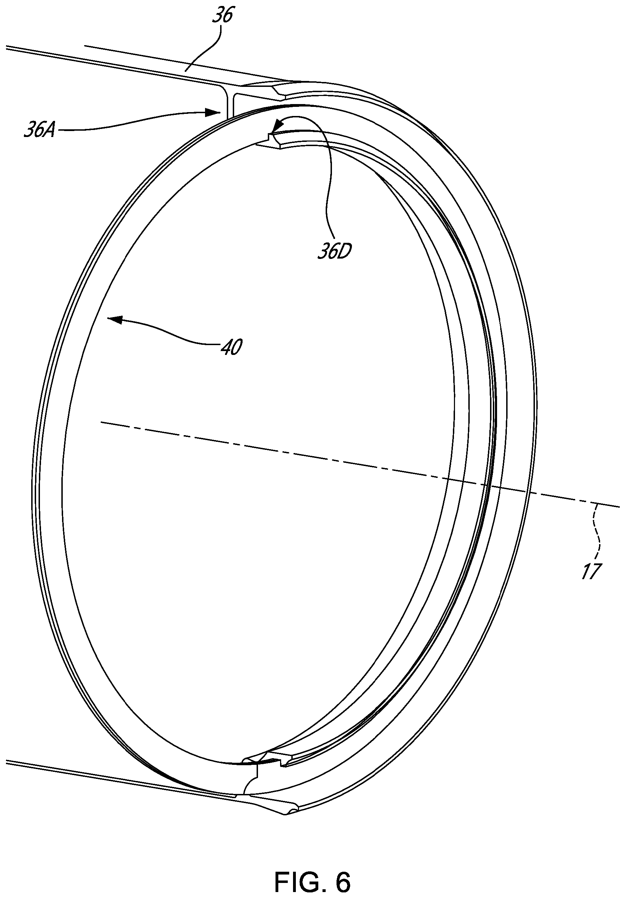

Referring to Figs. 6-7, in some embodiments, the turbine exhaust duct 30 includes an inner damping ring 40 engaged to the inner peripheral wall 36 at the inlet end 33A of the inlet conduit 33. Herein, the expression "at the inlet" implies that the inner damping ring 40 is proximate the inlet end 33A of the inlet conduit 33. In other words, the inner damping ring 40 may be slightly axially offset from the inlet end 33A without departing from the scope of the present disclosure. This axial offset may be about 10% of an axial length of the inlet conduit 33. The inner damping ring 40 may be a spring-loaded ring, but any suitable biasing member may be used. The inner damping ring 40 is biasing the inner peripheral wall 36 radially inwardly towards the central axis 17. In some embodiments, the inner damping ring 40 is engaged to an L-shaped flange 36A protruding radially inwardly from the inner peripheral wall 36. The L-shaped flange 36A is located outside of fluid flow passage of the turbine exhaust duct 30 to avoid interfering with a flow flowing therethrough. The L-shaped flange 36A has a radial section 36B protruding substantially radially from the inner peripheral wall 36 and an axial section 36C protruding substantially axially from the radial section 36B. The axial section 36C may extend towards the inlet end 33A of the inlet conduit 33. In the context of the present disclosure, the expression "substantially" in "substantially axial" implies that an axial component of a direction amounts to at least 50%. A circumferential groove 36D is defined in an outer diameter surface of the axial section 36C. The groove 36D is correspondingly-sized to accept the inner damping ring 40.

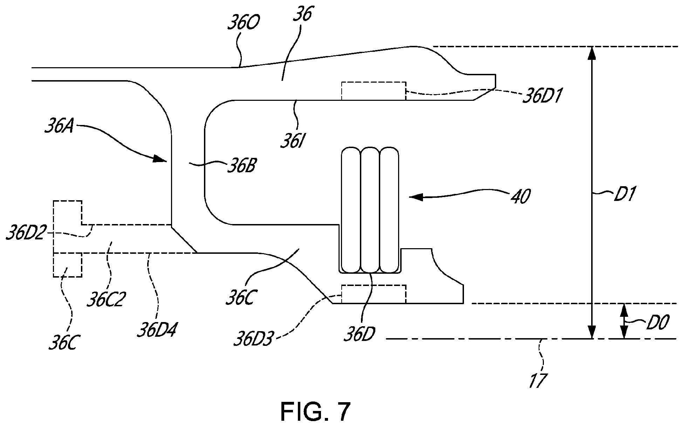

The inner damping ring 40 has an at-rest diameter, depicted as a radius D0 in Fig. 7, when not engaged to the inner peripheral wall 36. The at-rest diameter is smaller than a diameter of the inner damping ring 40 when engaged to the inner peripheral wall 36 in the groove 36D to be able to exert a radially-inward force to the inner peripheral wall 36.

Still referring to Fig. 7, in an alterative embodiment, a groove 36D1 may be defined by the inner peripheral wall 36 directly. Put differently, the inner peripheral wall 36 has a radially-outer side 36O facing the fluid flow passage and a radially-inner side 36I opposite the radially-outer side 36O; the groove 36D1 may extend from the radially-inner side 36I towards the radially-outer side 36O. The groove 36D1 may thus open to the radially-inner side 36I. Thus, the groove 36D1 is defined by the inner peripheral wall 36 at a face that is oriented away from the fluid flow passage defined between the inner peripheral wall 36 and the outer peripheral wall 37. In such an embodiment, the inner damping ring 40 would have an at-rest diameter, depicted as radius D1 in Fig. 7, being greater than a diameter of the inner damping ring 40 when engaged to the inner peripheral wall 36 in the groove 36D1 to be able to exert a radially-outward force to the inner peripheral wall 36.

In accordance with another embodiment, the axial section 36C2 may extend forwardly, instead of rearward, from the radial section 36B. The axial section 36C2 thus extends away from the inlet end 33A of the inlet conduit 33. The groove 36D2 is defined by the axial section 36C2 as illustrated. In this case, the damping ring 40 would have an at-rest diameter being smaller than a diameter of the damping ring 40 when engaged in the groove 36D2.

In yet another embodiment, the axial section 36C may define a groove 36D3 to receive the inner damping ring 40. The at-rest diameter of the ring would be greater than its diameter once sitting inside the groove 36D3. This would create a radially-outward force. In still yet another embodiment, the axial section 36C2 may define a groove or recess 36D4 at its inner face such that the at-rest diameter of the inner damping ring 40 would be greater than its diameter once sitting inside the groove 36D4. This would create a radially-outward force.

The damping rings presented in this disclosure are configured to increase the stiffness of the turbine exhaust duct 30. Such an increase in the stiffness may at least partially mitigate the vibrations the turbine exhaust duct 30 is subjected to during operation of the gas turbine engine 10. In some cases, the damping ring is a helicoidal spring and its expansion or contraction may create friction between its different loops that are abutting against one another. This friction may contribute in damping the vibrations of the turbine exhaust duct. It will be appreciated that the stiffness of those damping rings may be selected depending on the applications, the size of the turbine exhaust duct, and of any other suitable parameters.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A turbine exhaust duct (TED) (30) for an aircraft engine (10), comprising:
a body (31) having a central axis (17) and having an inner wall (36) and an outer wall (37) conjointly defining an annular inlet conduit (33) and outlet conduits (34, 35) communicating with the annular inlet conduit (33) and extending generally radially outward relative to the annular inlet conduit (33), the annular inlet conduit (33) extending from an inlet end (33A) to intersections with the outlet conduits (34, 35); and
an inner damping ring (40) engaged to the inner wall (36) at the inlet end (33A) of the inlet conduit (33), the inner damping ring (40) biasing the inner wall (36) in a radial direction relative to the central axis (17).

2. The TED (30) of claim 1, wherein the inner damping ring (40) biases the inner wall (36) towards the central axis (17).

3. The TED (30) of claim 1 or 2, wherein the inner damping ring (40) is received in a correspondingly-sized groove (36D) defined by the inner wall (36).

4. The TED (30) of claim 3, wherein the correspondingly-sized groove (36D) is defined by an L-shaped flange (36A) secured to the inner wall (36), and the L-shaped flange (36A) is located outside a fluid flow passage defined between the inner wall (36) and the outer wall (37).

5. The TED (30) of claim 4, wherein the L-shaped flange (36A) includes a first section (36B) extending radially from the inner wall (36) and a second section (36C) extending axially from the first section (36B), and the correspondingly-sized groove (36D) is defined by the second section (36C).

6. The TED (30) of claim 5, wherein the second section (36C) extends axially towards the inlet end (33A) of the annular inlet conduit (33).

7. The TED (30) of claim 3, wherein the correspondingly-sized groove (36D) is defined by the inner wall (36) at a face (36I) oriented away from a fluid flow passage defined between the inner wall (36) and the outer wall (37).

8. The TED (30) of any preceding claim, wherein the inner damping ring (40) has an at-rest diameter when not engaged to the inner wall (36), the at-rest diameter being smaller than a diameter of the inner damping ring (40) when engaged to the inner wall (36).

9. The TED (30) of claim 1, wherein the inner damping ring (40) biases the inner wall (36) away from the central axis (17), the inner damping ring (40) has an at-rest diameter when not engaged to the outer wall (37), the at-rest diameter being greater than a diameter of the inner damping ring (40) when engaged to the inner wall (36).

10. The TED (30) of any preceding claim, wherein the inner damping ring (40) is a spring-loaded ring.

11. A reverse-flow gas turbine engine (10), comprising:
an outer case assembly (18) extending around a central axis (17) and enclosing a core, the core including a compressor section (12), a combustor (13), and a turbine section (14), the turbine section (14) located forward of the combustor (13) and of the compressor section (12) relative to a direction of travel of the reverse-flow gas turbine engine (10), the outer case assembly (18) including an exhaust case (18D) defining openings; and
the turbine exhaust duct (30) of any preceding claim.
